# FASCICULE DE BREVET EUROPEEN

(11) **EP 3 418 194 B1**
(45) Date de publication et mention de la délivrance du brevet: **27.11.2019**
(21) Numéro de dépôt: 18179230.0
(22) Date de dépôt: 22.06.2018
(51) Int. Cl.: B64D 13/06

(54) **SYSTÈME ET PROCÉDÉ DE CONTRÔLE ENVIRONNEMENTAL D'UNE CABINE D'UN AÉRONEF ET AÉRONEF ÉQUIPÉ D'UN TEL SYSTÈME DE CONTRÔLE**
KLIMAANLAGE UND ENTSPRECHENDES VERFAHREN FÜR DIE KABINE EINES LUFTFAHRZEUGS, UND LUFTFAHRZEUG, DAS MIT EINER SOLCHEN ANLAGE AUSGESTATTET IST
SYSTEM AND METHOD FOR ENVIRONMENTAL CONTROL OF AN AIRCRAFT CABIN AND AIRCRAFT PROVIDED WITH SUCH A CONTROL SYSTEM

(30) Priorité: 23.06.2017 FR 1755806
(43) Date de publication de la demande: 26.12.2018
(73) Titulaire: Liebherr-Aerospace Toulouse SAS, 31200 Toulouse (FR)
(72) Inventeur: LABORDE, Fabrice, 31200 TOULOUSE (FR); VAUCORET, Cyril, 31240 SAINT JEAN (FR); FAYOLLE, Laurent, 31850 MONTRABE (FR); LAVERGNE, David, 31620 BOULOC (FR)
(74) Mandataire: Bringer, Mathieu

(56) Documents cités:
- EP-A2- 2 378 086
- US-A- 5 014 518
- US-A1- 2002 035 838

## Description

### 1. Domaine technique de l'invention

L'invention concerne un système et un procédé de contrôle environnemental d'une cabine d'un aéronef et s'étend à un aéronef équipé d'un tel système de contrôle environnemental.

### 2. Arrière-plan technologique

Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l'aéronef qui nécessite un air à une pression et/ou une température contrôlée.

Le contrôle environnemental des cabines d'un aéronef est aujourd'hui couramment réalisé par l'intermédiaire d'une combinaison de moyens pneumatiques et électriques. Cela étant, dans certains aéronefs, le contrôle environnemental des cabines est réalisé de façon entièrement pneumatique, c'est-à-dire uniquement par la mise en œuvre de systèmes fonctionnant à partir d'air prélevé sur les compresseurs des moteurs de propulsion de l'aéronef et d'air ambiant extérieur lorsque l'aéronef est en vol, et/ou à partir d'air prélevé sur un moteur auxiliaire, plus connu sous la dénomination d'APU.

Un tel système de contrôle environnement d'une cabine comprend typiquement un dispositif de prélèvement d'air comprimé sur au moins un compresseur d'un moteur de propulsion de l'aéronef et une turbomachine à cycle à air comprenant au moins un compresseur et une turbine, le compresseur étant alimenté en air par le dispositif de prélèvement d'air comprimé après passage par une vanne de régulation de débit ou de pression, et la turbine comprenant une sortie d'air alimentant la cabine en température et débit contrôlés. Le système comprend en outre différents échangeurs de chaleur, vannes de régulation et une boucle d'extraction d'eau.

Dans tout le texte, on désigne par turbine un dispositif rotatif destiné à utiliser l'énergie cinétique de l'air pour faire tourner un arbre supportant les aubes de la turbine. On désigne par compresseur, un dispositif rotatif destiné à augmenter la pression de l'air qu'il reçoit en entrée.

L'une des difficultés des solutions entièrement pneumatiques réside dans le fait qu'un prélèvement d'air sur les compresseurs des moteurs de propulsion impacte les performances énergétiques de ces moteurs. En particulier, ce prélèvement d'air sur les compresseurs des moteurs augmente sensiblement la consommation de carburant.

Aussi, différentes solutions ont déjà été proposées pour limiter au maximum ce prélèvement d'air sur les moteurs de propulsion de l'aéronef.

Par exemple, le demandeur a d'ores et déjà proposé de récupérer une partie de l'énergie de l'air vicié de la cabine qui doit être renouvelé pour entrainer une turbine d'un turbocompresseur intermédiaire couplée mécaniquement à un compresseur, lui-même relié en communication de fluide au dispositif de prélèvement d'air sur le moteur de propulsion. Il est ainsi possible de limiter le prélèvement sur le moteur de propulsion, dans certaines phases du vol, et d'utiliser à la place l'énergie de l'air vicié récupéré en sortie de cabine pour entrainer le compresseur du turbocompresseur, qui alimente la turbomachine du pack de conditionnement d'air.

Le document EP 2 378 086 A2 divulgue un système selon le préambule de la revendication 1. Les documents US 2002/0035838 A1 et US 5 014 518 A divulguent des systèmes similaires.

Les inventeurs ont cherché à proposer une nouvelle architecture permettant de limiter d'avantage les prélèvements d'air sur les moteurs de propulsion des aéronefs.

### 3. Objectifs de l'invention

L'invention vise à fournir un système de contrôle environnemental d'une cabine d'aéronef qui minimise le prélèvement d'air sur le compresseur des moteurs de propulsion.

L'invention vise également à fournir un procédé de contrôle environnemental d'une cabine d'aéronef.

L'invention vise également à proposer un aéronef présentant les mêmes avantages. Elle vise en particulier à proposer un aéronef dans lequel le contrôle environnemental peut être assuré de façon exclusivement pneumatique (le dispositif de contrôle environnemental pouvant être, selon certains modes de réalisation, exempt de moteur électrique), et de consommation réduite en carburant.

### 4. Exposé de l'invention

Pour ce faire, l'invention concerne un système de contrôle environnemental d'une cabine d'aéronef comprenant :
- un dispositif de prélèvement d'air comprimé d'au moins un compresseur de moteur de l'aéronef, dit dispositif de prélèvement d'air moteur,
- une turbomachine à cycle à air comprenant au moins un premier compresseur et une turbine couplés mécaniquement l'un à l'autre, ledit premier compresseur comprenant une entrée d'air reliée audit dispositif de prélèvement d'air moteur, par une conduite, dite conduite de prélèvement d'air, et une sortie d'air reliée à une entrée d'air de la turbine de la turbomachine à cycle à air, et ladite turbine comprenant une sortie d'air reliée à la cabine par une conduite, dite conduite d'entrée de cabine, pour pouvoir alimenter la cabine en air à pression et température contrôlées.

Un système de contrôle environnemental d'une cabine d'aéronef selon l'invention est caractérisé en ce qu'il comprend en outre :
- un aubage à section d'injection variable monté sur ladite turbine de ladite turbomachine à cycle à air de manière à pouvoir modifier sur commande le débit d'air alimentant une entrée d'air de cette turbine,
- un deuxième compresseur monté sur ladite turbomachine à cycle à air comprenant une entrée d'air reliée à un dispositif de prélèvement d'air extérieur et une sortie en communication fluidique avec ladite conduite d'entrée de cabine.

Un système selon l'invention permet donc de limiter les inconvénients liés au prélèvement d'air sur le moteur de propulsion de l'aéronef (pertes énergétiques principalement) en récupérant une partie de l'énergie de cet air prélevé sur le moteur.

La récupération de l'énergie de l'air prélevé sur le moteur, connu sous la dénomination anglaise d'air *bleed,* résulte de l'absence d'une vanne de régulation de débit en sortie du dispositif de prélèvement d'air, cette régulation étant selon l'invention obtenue par l'intermédiaire d'un aubage à section d'injection variable monté sur la turbine de la turbomachine à cycle à air. En d'autres termes, toute la puissance de l'air prélevé sur le moteur de propulsion est acheminée vers la turbine du système de conditionnement d'air et la variation de débit se fait directement par une turbine à section d'injection variable.

La récupération de cette énergie permet également l'entrainement d'un deuxième compresseur monté sur la turbomachine à cycle à air qui est utilisé pour comprimer de l'air qui provient d'un dispositif de prélèvement d'air extérieur.

Ainsi, pour un même débit de sortie du pack de conditionnement d'air, le système selon l'invention permet de limiter le prélèvement d'air sur le compresseur du moteur d'aéronef, et donc de limiter la consommation de carburant.

Au sol ou dans les phases de vol en basse altitude, le deuxième compresseur, entrainé en rotation par la turbine de la turbomachine à cycle à air, peut comprimer de l'air prélevé à l'extérieur de l'aéronef par une prise d'air (plus connu sous la dénomination anglaise de *scoop*)*.* Cet air prélevé est injecté en amont du pack de conditionnement d'air, par exemple pour circuler dans un circuit d'extraction d'eau.

Le flux d'air combiné (c'est-à-dire, le flux d'air prélevé sur le compresseur du moteur d'aéronef et le flux d'air *scoop* comprimé par le deuxième compresseur) est régulé par un aubage à section d'injection variable monté sur la turbine de la turbomachine à cycle à air, à partir de mesures de débit issues par exemple, d'un système de mesure de débit agencé en amont de la cabine.

Avantageusement, un système selon l'invention comprend en outre une conduite de dérivation agencée entre la sortie du deuxième compresseur de la turbomachine à cycle à air et ladite conduite d'entrée de cabine équipée d'une vanne d'altitude configurée pour permettre au compresseur d'alimenter directement ladite conduite d'entrée de cabine lorsque l'aéronef atteint et/ou dépasse une altitude prédéterminée.

Ainsi, selon cette variante avantageuse, en altitude, l'air comprimé par le deuxième compresseur de la turbomachine à cycle à air est directement acheminé vers la sortie du pack de conditionnement d'air.

Dans tous les cas, la sortie du deuxième compresseur est en communication fluidique avec la conduite d'entrée de cabine. Cette communication fluidique avec la conduite d'entrée de cabine est soit directe, en altitude, soit indirecte, au sol ou dans les phases de basse altitude, après passage par la turbine.

Avantageusement, un système selon l'invention comprend en outre un turbocompresseur intermédiaire comprenant un compresseur et une turbine couplés mécaniquement l'un à l'autre, ladite turbine comprenant une entrée d'air reliée à ladite cabine par une conduite, dite conduite de sortie de cabine, et ledit compresseur comprenant une entrée d'air reliée à un dispositif de prélèvement d'air extérieur et une sortie d'air reliée à ladite conduite d'entrée de cabine par l'intermédiaire d'un échangeur thermique, ledit échangeur thermique étant en outre en communication fluidique avec ladite conduite de sortie de cabine.

De préférence, l'échangeur thermique est en communication fluidique avec la conduite de dérivation, en amont de la vanne d'altitude. Cette conduite de dérivation débouche dans la conduite de sortie.

Selon ce mode de réalisation avantageux, une partie de l'air évacué de la cabine pressurisée est récupérée. La récupération de l'énergie est obtenue par la présence du turbocompresseur intermédiaire comprenant au moins un étage de compression et au moins une turbine couplés mécaniquement l'un à l'autre. L'entrée d'air de la turbine est reliée à la cabine par une conduite de sortie de cabine pour récupérer l'air vicié qui est évacué de la cabine. Le compresseur comprend une entrée d'air reliée à un dispositif de prélèvement d'air extérieur et une sortie d'air reliée à la conduite d'entrée de cabine par l'intermédiaire d'un échangeur thermique, qui est lui-même en communication fluidique avec la conduite de sortie de cabine.

Ainsi, l'échangeur thermique permet de récupérer l'énergie thermique en sortie du compresseur pour augmenter la température, et donc l'énergie en entrée de turbine. Les inventeurs ont déterminé que cette architecture permet de récupérer de l'ordre de 15% de puissance supplémentaire. En outre, cet échangeur thermique permet d'obtenir une température de l'air en sortie de ce pack de récupération d'énergie qui est proche de la température cabine, à 5°C près.

Ce pack de récupération d'énergie fournit l'air ainsi conditionné en sortie du pack de conditionnement d'air qui adapte le débit moteur et le prélèvement d'air du deuxième compresseur en fonction du débit de ce compresseur.

Aussi, en altitude, le flux d'air *scoop* comprimé par le deuxième compresseur et le flux d'air *scoop* comprimé par le compresseur du turbocompresseur intermédiaire, passent par la vanne d'altitude et sont directement injectés dans la conduite d'entrée de cabine, et mélangés avec le flux d'air prélevé sur le compresseur du moteur d'aéronef et régulé par l'aubage à section d'injection variable monté sur la turbine de la turbomachine à cycle à air.

Avantageusement et selon cette variante avantageuse, le système comprend en outre un échangeur thermique en communication fluidique avec ladite conduite de prélèvement d'air et une conduite d'alimentation de la turbine du turbocompresseur intermédiaire.

Cette variante avantageuse permet de recycler la température de l'air prélevé sur le moteur d'aéronef dans la turbine de détente du turbocompresseur intermédiaire, au profit de la compression cabine, tout en réduisant les besoins de pré-refroidissement de l'air prélevé sur le moteur avant injection dans le pack de conditionnement d'air.

Avantageusement et selon l'invention, ladite sortie du compresseur de la turbomachine à cycle à air est reliée à l'entrée de ladite turbine par l'intermédiaire d'au moins un échangeur thermique, lui même en communication fluidique avec une prise d'air dynamique extérieur.

Cela permet de refroidir l'air comprimé et réchauffé qui est fournit par le compresseur avant son introduction dans l'entrée d'air de la turbine de la turbomachine à cycle à air.

Avantageusement et selon l'invention, ladite conduite de prélèvement d'air est équipée d'au moins un échangeur thermique en communication fluidique avec une prise d'air dynamique extérieur.

Selon cette variante avantageuse, un échangeur thermique de refroidissement air/air est agencé sur la conduite de prélèvement en amont de l'entrée d'air dans le compresseur de la turbomachine à cycle à air. Cet échangeur est aussi traversé par de l'air à pression dynamique issu d'une prise d'air, connue sous la dénomination de prise d'air RAM, de façon à refroidir l'air avant son entrée dans le compresseur. Cet échangeur de chaleur permet un transfert de chaleur entre un premier flux d'air circulant dans la conduite de prélèvement d'air jusqu'à l'entrée du compresseur, et un deuxième circuit formé par un flux d'air circulant entre la prise d'air RAM et l'entrée du compresseur.

Avantageusement, un système selon l'invention comprend un moto-ventilateur configuré pour pouvoir assurer la circulation d'air à travers lesdits échangeurs thermiques.

Selon cette variante, la circulation d'air dans les échangeurs thermiques est assurée par un moto-ventilateur, ce qui permet de conserver le maximum d'énergie pneumatique pour comprimer l'air extérieur issu du dispositif de prélèvement d'air extérieur. En particulier, dans les systèmes antérieurs, la circulation d'air dans les échangeurs est assurée par une roue de ventilateur montée sur l'arbre de la turbomachine à cycle à air. L'invention selon cette variante permet de libérer l'arbre de la turbomachine, et donc d'utiliser l'énergie mécanique récupérée pour, notamment, entrainer le deuxième compresseur.

L'air en provenance de la cabine peut être de l'air de recirculation. Dans ce cas, la sortie de la turbine du turbocompresseur intermédiaire est reliée à l'entrée de la cabine ou à une chambre de mélange.

Avantageusement et selon l'invention, la sortie d'air de la turbine du turbocompresseur est reliée à une sortie d'air à l'extérieur de l'aéronef de façon à rejeter l'air détendu à l'extérieur.

Selon cette variante, la sortie d'air de la turbine du turbocompresseur intermédiaire est reliée à une sortie d'air à l'extérieur de l'aéronef de manière à pouvoir évacuer l'air détendu à l'extérieur. Dans ce cas, au moins une partie de l'air à évacuer de la cabine pour le renouvèlement d'air est utilisée pour entrainer la turbine du turbocompresseur intermédiaire.

Avantageusement et selon l'invention, ledit turbocompresseur est un turbocompresseur à deux étages turbines en parallèle.

L'invention concerne également un procédé de contrôle environnemental d'une cabine d'aéronef comprenant :
- un prélèvement d'air comprimé d'au moins un compresseur de moteur de l'aéronef par un dispositif de prélèvement d'air,
- un acheminement par une conduite de prélèvement de cet air prélevé vers une entrée d'un compresseur d'une turbomachine à cycle à air couplé mécaniquement à une turbine,
- un acheminement de l'air en sortie de compresseur vers une entrée de cette turbine,
- un acheminement de l'air en sortie de turbine vers ladite cabine par une conduite d'entrée de cabine, ledit air étant délivré à une pression et température contrôlées.

Un procédé selon l'invention est caractérisé en ce qu'il comprend :
- une régulation du débit d'air alimentant ladite turbine de la turbomachine par un aubage à section d'injection variable monté sur ladite turbine de ladite turbomachine de manière à pouvoir modifier sur commande le débit d'air alimentant une entrée d'air de ladite turbine,
- un acheminement d'un air prélevé par un dispositif de prélèvement d'air extérieur vers une entrée d'un deuxième compresseur monté sur ladite turbomachine dont une sortie est en communication fluidique avec ladite conduite d'entrée de cabine.

Avantageusement, un procédé selon l'invention comprend en outre l'acheminement direct de l'air en sortie du deuxième compresseur vers ladite conduite d'entrée de cabine par une conduite de dérivation équipée d'une vanne d'altitude configurée pour permettre au compresseur d'alimenter directement ladite conduite d'entrée de cabine lorsque l'aéronef atteint une altitude prédéterminée.

Avantageusement, un procédé selon l'invention comprend en outre :
- un acheminement de l'air en sortie de cabine, par une conduite de sortie de cabine vers une entrée d'air d'une turbine d'un turbocompresseur couplé mécaniquement à un compresseur,
- un acheminement d'un air prélevé par un dispositif de prélèvement d'air extérieur vers une entrée du compresseur,
- un acheminement de l'air en sortie de compresseur vers ladite conduite d'entrée de cabine par l'intermédiaire d'un échangeur thermique, ledit échangeur thermique étant en outre en communication fluidique avec ladite conduite de sortie de cabine.

De préférence, l'échangeur thermique est en communication fluidique avec la conduite de dérivation, en amont de la vanne d'altitude. Cette conduite de dérivation débouche dans la conduite de sortie.

Un système selon l'invention met avantageusement en œuvre un procédé selon l'invention, et un procédé selon l'invention est avantageusement mis en œuvre par un système selon l'invention.

L'invention concerne également un aéronef comprenant au moins un moteur de propulsion et une cabine, caractérisé en ce qu'il comprend un système de contrôle environnemental de cette cabine selon l'invention.

L'invention concerne également un système de contrôle environnemental, un procédé de contrôle environnemental et un aéronef caractérisés en combinaison par tout ou partie des caractéristiques mentionnées ci-dessus ou ci-après.

### 5. Liste des figures

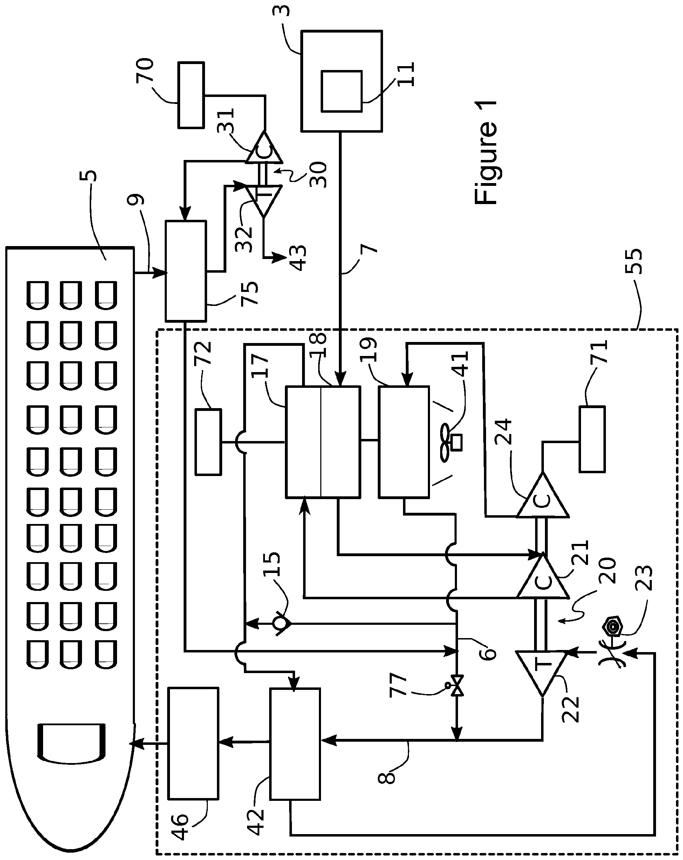

D'autres buts, caractéristiques et avantages de l'invention apparaîtront à la lecture de la description suivante donnée à titre uniquement non limitatif et qui se réfère à la figure 1 annexée qui est une vue schématique d'un système de contrôle environnemental selon un mode de réalisation de l'invention mettant en œuvre un procédé de contrôle environnemental selon l'invention dans un aéronef selon l'invention.

### 6. Description détaillée d'un mode de réalisation de l'invention

Un aéronef selon l'invention comprend, tel que représenté schématiquement sur la figure 1, une cabine 5 de passagers, et au moins un moteur principal 3. Ce moteur principal 3 dédié à la propulsion de l'aéronef comprend par exemple un compresseur 11 et une turbine non représentée sur la figure 1.

Le système de contrôle environnemental selon l'invention comprend au moins un pack 55 de conditionnement d'air, plus connu sous l'acronyme ECS. Ce pack 55 de conditionnement peut présenter différents modes de réalisation. Le mode de réalisation représenté sur la figure 1 est schématique et comprend une turbomachine à cycle à air 20, trois échangeurs thermiques 17, 18, 19 en communication fluidique avec un canal de circulation d'air dynamique (plus connu sous la dénomination de RAM), et une boucle d'extraction d'eau 42, qui n'est pas représentée en détail à des fins de clarté.

Le pack 55 de conditionnement d'air est alimenté en air prélevé sur le compresseur 11 du moteur 3 par l'intermédiaire d'une conduite 7 de prélèvement d'air, et le pack 55 alimente la cabine 5 par l'intermédiaire d'une conduite 8 d'entrée de cabine.

La turbomachine à cycle à air 20 comprend au moins un compresseur 21 rotatif et une turbine 22 rotative couplés mécaniquement l'un à l'autre. Le compresseur 21 et la turbine 22 comprennent chacun une entrée d'air et une sortie d'air.

Un premier circuit d'un échangeur thermique 17 air/air est interposé entre la sortie du compresseur 21 et l'entrée de la turbine 22 de manière à pouvoir refroidir l'air comprimé et réchauffé délivré par le compresseur 21 avant son introduction dans l'entrée d'air de la turbine 22. A l'aval de l'échangeur thermique 17, le flux d'air comprimé refroidi passe dans une boucle d'extraction d'eau 42. Cette boucle d'extraction d'eau 42 comprend par exemple un réchauffeur formé d'un échangeur de chaleur air/air, un condenseur formé également d'un échangeur de chaleur air/air et un extracteur d'eau. L'air froid détendu à la sortie de la turbine 22 passe à travers le condenseur de la boucle d'extraction d'eau 42 pour refroidir le flux d'air à l'amont de la turbine 22, puis alimente une chambre de mélange 46, qui est reliée à la cabine 5.

L'échangeur thermique 17 comprend un deuxième circuit traversée par de l'air à pression dynamique en provenance d'au moins une bouche 72 de prélèvement d'air pour le refroidissement de l'air comprimé réchauffé entre le compresseur 21 et la turbine 22.

En outre, un premier circuit d'un échangeur thermique 18 de refroidissement air/air est interposé entre l'entrée du système de conditionnement d'air 55 et l'entrée d'air du compresseur 21. Le deuxième circuit de cet échangeur thermique 18 est traversé par de l'air à la pression dynamique en provenance de la bouche 72 de prélèvement d'air.

Enfin, un premier circuit d'un échangeur thermique 19 de refroidissement air/air est interposé entre la sortie d'air d'un deuxième compresseur 24 monté sur la turbomachine 20 à cycle à air, alimenté en air par un dispositif de prélèvement d'air extérieur 71, et la conduite d'entrée 8 de cabine. Le deuxième circuit de cet échangeur thermique 19 est traversé par de l'air à la pression dynamique en provenance de la bouche 72 de prélèvement d'air.

Comme décrit plus loin, l'air refroidi par cet échangeur thermique 19 est soit directement injecté dans la conduite d'entrée 8 de cabine dans les phases de vol en altitude, soit injecté dans la conduite d'entrée 8 de cabine après passage par la boucle d'extraction d'eau 42 et la turbine 22.

La circulation d'air dans les deuxièmes circuits des échangeurs thermiques 17, 18 et 19 est assuré par un moto-ventilateur 41.

Un système selon l'invention est remarquable en ce qu'il comprend un aubage à section d'injection variable 23 monté sur la turbine 22 de la turbomachine 20 à cycle à air de manière à pouvoir modifier sur commande le débit d'air alimentant l'entrée d'air de la turbine 22. Cet aubage à section d'injection variable 23 peut être de tous types connus. Un tel aubage est configuré pour modifier la section de passage de l'air dans la turbine 22 et donc à modifier le débit d'air en entrée de turbine 22.

Un tel aubage comprend par exemple deux faces de guidage d'air agencées l'une par rapport à l'autre de manière à former entre elles un passage d'injection d'air apte à alimenter un aubage mobile de la turbine. Il comprend en outre une pluralité d'aubes interposées entre les deux faces de guidage dans ledit passage d'injection, agencées de façon à former, dans le passage d'injection entre elles deux à deux et entre les deux faces de guidage, une pluralité de canaux, chaque aube étant montée rotative selon un axe de rotation sécant aux faces de guidage, de telle sorte qu'une modification de position angulaire d'une aube entraîne une modification des caractéristiques géométriques de chaque canal délimité par cette aube, et un mécanisme de contrôle de position angulaire des aubes.

Un système selon l'invention comprend également une conduite de dérivation 6 agencée entre la sortie du deuxième compresseur 24 de la turbomachine 20 à cycle à air et la conduite d'entrée de cabine 8. Cette conduite de dérivation 6 est équipée d'une vanne d'altitude 77 configurée pour permettre au compresseur d'alimenter directement la conduite d'entrée de cabine 8 lorsque l'aéronef atteint une altitude prédéterminée. Un clapet anti-retour 15 permet de contrôler le circuit en fonction du vol. En altitude, l'air comprimé par le compresseur 24 est directement véhiculé par la conduite de dérivation 6 vers la conduite d'entrée de cabine 8 et au sol ou à basse altitude, l'air passe par le clapet anti-retour 15 et rejoint la boucle d'extraction d'eau 42 et la turbine 15.

Le système selon le mode de réalisation de la figure comprend également un turbocompresseur 30 intermédiaire comprenant un compresseur 31 et une turbine 32 couplés mécaniquement l'un à l'autre. Ce turbocompresseur intermédiaire vise à récupérer une partie de l'énergie de l'air vicié expulsé de la cabine 5.

Pour ce faire, la turbine 32 comprend une entrée d'air reliée à la cabine 5 par une conduite de sortie 9 de cabine, et le compresseur 31 comprend une entrée d'air reliée à un dispositif de prélèvement d'air extérieur 70 et une sortie d'air reliée à ladite conduite d'entrée de cabine 8 par l'intermédiaire d'un échangeur thermique 75. Cet échangeur thermique 75, plus connu sous la dénomination anglaise *d'intercooler* est en communication fluidique avec la conduite de sortie 9 de cabine.

Selon cette architecture, l'air récupéré de la cabine est d'abord utilisé pour refroidir le flux d'air comprimé par le compresseur 31. L'échangeur thermique 75 permet d'auto-stabiliser la température de l'air comprimé par le compresseur 31.

Le flux d'air est ensuite injecté dans le pack de conditionnement d'air, en amont de la vanne d'altitude 77 de la conduite de dérivation 6.

Ainsi, selon ce mode de réalisation, lorsque les conditions de pressurisation de la cabine 5 le permettent, une partie de l'énergie de l'air expulsé de la cabine 5 est récupérée au profit du système de conditionnement d'air.

En outre, un système de contrôle selon l'invention comprend une logique de commande associée à des vannes et dispositifs de régulation non représentés sur les figures permettant d'adapter les prélèvements d'air sur les différents organes en fonction des objectifs de pressurisation de la cabine.

## Revendications

1. Système de contrôle environnemental d'une cabine (5) d'aéronef comprenant :
- un dispositif de prélèvement d'air comprimé d'au moins un compresseur (11) de moteur (3) de l'aéronef,
- une turbomachine (20) à cycle à air comprenant au moins un compresseur (21) et une turbine (22) couplés mécaniquement l'un à l'autre, ledit compresseur (21) comprenant une entrée d'air reliée audit dispositif de prélèvement d'air comprimé d'au moins un compresseur (11) par une conduite, dite conduite de prélèvement (7), et une sortie d'air reliée à une entrée d'air de la turbine de la turbomachine à cycle à air, et ladite turbine (22) comprenant une sortie d'air reliée à la cabine (5) par une conduite, dite conduite d'entrée (8) de cabine, pour pouvoir alimenter la cabine (5) en air à pression et température contrôlées,
**caractérisé en ce qu'**il comprend en outre :
- un aubage fixe à section d'injection variable (23) monté sur ladite turbine (22) de ladite turbomachine (20) à cycle à air de manière à pouvoir modifier sur commande le débit d'air alimentant une entrée d'air de ladite turbine (22),
- un deuxième compresseur (24) monté sur ladite turbomachine (20) à cycle à air comprenant une entrée d'air reliée à un dispositif de prélèvement d'air extérieur (71) et une sortie en communication fluidique avec ladite conduite d'entrée (8) de cabine.

2. Système selon la revendication 1, **caractérisé en ce qu'**il comprend en outre une conduite de dérivation (6) agencée entre la sortie du deuxième compresseur (24) de la turbomachine (20) à cycle à air et ladite conduite d'entrée de cabine (8) équipée d'une vanne d'altitude (17) configurée pour permettre au compresseur d'alimenter directement ladite conduite d'entrée de cabine (8) lorsque l'aéronef atteint une altitude prédéterminée.

3. Système selon l'une des revendications 1 ou 2, **caractérisé en ce qu'**il comprend en outre un turbocompresseur (30) intermédiaire comprenant un compresseur (31) et une turbine (32) couplés mécaniquement l'un à l'autre, ladite turbine (32) comprenant une entrée d'air reliée à la cabine (5) par une conduite, dite conduite de sortie (9) de cabine, et ledit compresseur (31) comprenant une entrée d'air reliée à un dispositif de prélèvement d'air extérieur (70) et une sortie d'air reliée à ladite conduite d'entrée de cabine (8) par l'intermédiaire d'un échangeur thermique (75), ledit échangeur thermique (75) étant en outre en communication fluidique avec ladite conduite de sortie (9) de cabine.

4. Système selon la revendication 3, **caractérisé en ce que** ladite sortie d'air de la turbine (32) du turbocompresseur (30) est reliée à une sortie d'air (43) à l'extérieur de l'aéronef de façon à rejeter l'air détendu à l'extérieur.

5. Système selon l'une des revendications 3 ou 4, **caractérisé en ce que** ledit turbocompresseur (30) est un turbocompresseur à deux étages turbines en parallèle.

6. Système selon l'une des revendications 3 à 5, **caractérisé en ce qu'**il comprend en outre un échangeur thermique en communication fluidique avec ladite conduite de prélèvement d'air et une conduite d'alimentation de la turbine du turbocompresseur intermédiaire.

7. Système selon l'une des revendications 1 à 6, **caractérisé en ce que** ladite sortie du compresseur (21) de la turbomachine (20) à cycle à air est reliée à l'entrée de ladite turbine (22) par l'intermédiaire d'au moins un échangeur thermique (19), lui même en communication fluidique avec une prise (72) d'air dynamique extérieur.

8. Système selon l'une des revendications 1 à 7, **caractérisé en ce que** ladite conduite (7) de prélèvement d'air est équipée d'au moins un échangeur thermique (18) en communication fluidique avec une prise (72) d'air dynamique extérieur.

9. Système selon l'une des revendications 7 ou 8, **caractérisé en ce qu'**il comprend en outre un moto-ventilateur (41) configuré pour pouvoir assurer la circulation d'air à travers lesdits échangeurs thermiques (17, 18, 19).

10. Procédé de contrôle environnemental d'une cabine (5) d'aéronef comprenant :
- un prélèvement d'air comprimé d'au moins un compresseur (11) de moteur de l'aéronef par un dispositif de prélèvement d'air,
- un acheminement par une conduite (7) de prélèvement de cet air prélevé vers une entrée d'un compresseur (21) d'une turbomachine (20) à cycle à air couplé mécaniquement à une turbine (22),
- un acheminement de l'air en sortie de compresseur vers une entrée de cette turbine,
- un acheminement de l'air en sortie de turbine (22) vers ladite cabine (5) par une conduite d'entrée (8) de cabine, ledit air étant délivré à une pression et température contrôlées,
**caractérisé en ce qu'**il comprend en outre :
- une régulation du débit d'air alimentant ladite turbine (22) de la turbomachine (20) par un aubage fixe à section d'injection variable (23) monté sur ladite turbine (22) de ladite turbomachine (20) de manière à pouvoir modifier sur commande le débit d'air alimentant une entrée d'air de ladite turbine (22),
- un acheminement d'un air prélevé par un dispositif de prélèvement d'air extérieur (71) vers une entrée d'un deuxième compresseur (22) monté sur ladite turbomachine (20) dont une sortie est en communication fluidique avec ladite conduite d'entrée de cabine.

11. Procédé selon la revendication 10, **caractérisé en ce qu'**il comprend en outre l'acheminement direct de l'air en sortie du deuxième compresseur (22) vers ladite conduite d'entrée de cabine (8) par une conduite de dérivation (6) équipée d'une vanne d'altitude (17) configurée pour permettre au compresseur d'alimenter directement ladite conduite d'entrée de cabine (8) lorsque l'aéronef atteint une altitude prédéterminée.

12. Procédé selon l'une des revendications 10 ou 11, **caractérisé en ce qu'**il comprend en outre :
- un acheminement de l'air en sortie de cabine, par une conduite de sortie (9) de cabine vers une entrée d'air d'une turbine (32) d'un turbocompresseur (30) couplé mécaniquement à un compresseur (31),
- un acheminement d'un air prélevé par un dispositif de prélèvement d'air extérieur vers une entrée du compresseur (31),
- un acheminement de l'air en sortie de compresseur (31) vers ladite conduite d'entrée de cabine (8) par l'intermédiaire d'un échangeur thermique (75), ledit échangeur thermique (75) étant en outre en communication fluidique avec ladite conduite de sortie (9) de cabine.

13. Aéronef comprenant au moins un moteur de propulsion et une cabine, **caractérisé en ce qu'**il comprend un système de contrôle environnemental de cette cabine selon l'une des revendications 1 à 9.

## Patentansprüche

1. System zur Reinhaltung einer Flugzeugkabine (5), welches umfasst:
- ein Gerät zum Ablassen komprimierter Luft aus mindestens einem Kompressor (11) des Flugzeug-Motors (3),
- einen Luftkreislauf-Turbinenmotor (20) mit mindestens einem Kompressor (21) und einer Turbine (22), die mechanisch miteinander gekoppelt sind, worin der Kompressor (21) einen Luft-Einlass umfasst, der mit dem Gerät verbunden ist, um komprimierte Luft aus mindestens einem Kompressor (11) mittels einer als Entlüftungsleitung (7) bezeichneten Leitung abzulassen, und worin die Turbine (22) einen Luft-Auslass umfasst, der mit der Kabine (5) mittels einer als Kabinen-Einlassleitung (8) bezeichneten Leitung verbunden ist, um die Kabine (5) mit Luft mit gesteuertem Druck und Temperatur versorgen zu können,
**dadurch gekennzeichnet, dass** es weiter umfasst:
- eine Beschaufelung (23), die einen variablen Einblas-Querschnitt aufweist und an der Turbine (22) des Luftkreislauf-Turbinenmotors (20) angebracht ist, um die Strömungsrate der Luft, mit der ein Luft-Einlass der Turbine (22) versorgt wird, auf Wunsch modifizieren zu können,
- einen zweiten Kompressor (24), der an dem Luftkreislauf-Turbinenmotor (20) angebracht ist und einen Luft-Einlass umfasst, der mit einem Gerät (71) zum Ablassen von Luft nach Aussen und einem Auslass, der mit der Kabinen-Einlassleitung (8) in Fluidverbindung verbunden ist.

2. System nach Anspruch 1, **dadurch gekennzeichnet, dass** er weiter eine Bypass-Leitung (6) umfasst, die zwischen dem Auslass des zweiten Kompressors (24) des Luftkreislauf-Turbinenmotors (20) und der Kabinen-Einlassleitung (8) angeordnet ist, worin die Bypass-Leitung mit einem Höhen-Ventil (77) ausgestattet ist, das ausgestaltet ist, dass der Kompressor die Kabinen-Einlassleitung direkt versorgen kann, wenn die Kabinen-Einlassleitung (8) eine bestimmte Höhe erreicht.

3. System nach Anspruch 1 oder Anspruch 2, **dadurch gekennzeichnet, dass** es weiter umfasst, einen zwischengeschalteten Turbolader (30) mit einem Kompressor (31) und einer Turbine (32), die mechanisch miteinander gekoppelt sind, worin die Turbine (32) einen mit der Kabine (5) mittels einer als Kabinen-Auslassleitung (9) bezeichneten Leitung verbundenen Luft-Einlass umfasst, und worin der Kompressor (31) einen mit einem Gerät (70) verbundenen Luft-Einlass umfasst, um Luft nach Aussen abzulassen, und einen Luft-Auslass, der mit der Kabinen-Einlassleitung (8) mittels eines Wärmetauschers (75) verbunden ist, worin der Wärmetauscher (75) weiter mit der Kabinen-Auslassleitung (9) in Fluidverbindung steht.

4. System nach Anspruch 3, **dadurch gekennzeichnet, dass** der Luft-Auslass der Turbine (32) des Turboladers (30) mit einem Luft-Auslass (43) ausserhalb des Flugzeug verbunden ist, um die expandierte Luft nach Aussen abzulassen.

5. System nach Anspruch 3 oder Anspruch 4, **dadurch gekennzeichnet, dass** der Turbolader (30) ein Turbolader mit zwei parallelen Turbinenstufen ist.

6. System nach einem der Ansprüche 3 bis 5, **dadurch gekennzeichnet, dass** es weiter einen Wärmetauscher umfasst, der mit der Entlüftungsleitung in Fluidverbindung steht, und eine Leitung zum Versorgen der Turbine des zwischengeschalteten Turboladers.

7. System nach einem der Ansprüche 1 bis 6, **dadurch gekennzeichnet, dass** der Auslass des Kompressors (21) des Luftkreislauf-Turbinenmotors (20) mit dem Einlass der Turbine (22) mittels mindestens einem Wärmetauscher (19) verbunden ist, der wiederum in Fluidverbindung mit einer dynamischen äusseren Lufthutze (72) steht.

8. System nach einem der Ansprüche 1 bis 7, **dadurch gekennzeichnet, dass** die Entlüftungsleitung (7) mit mindestens einem Wärmetauscher (18) in Fluidverbindung mit einer dynamischen äusseren Lufthutze (72) versehen ist.

9. System nach einem Anspruch 7 oder Anspruch 8, **dadurch gekennzeichnet, dass** es weiter einen Elektrolüfter (41) umfasst, der ausgestaltet ist, die Zirkulation der Luft durch die Wärmetauscher (17, 18, 19) sicherzustellen.

10. Verfahren zur Reinhaltung einer Flugzeugkabine (5), welches umfasst:
- Ablassen von komprimierter Luft aus mindestens einem Kompressor (11) des Flugzeug-Motors mittels eines Geräts zum Ablassen von Luft,
- Führen, mittels einer Ablass-Leitung (7), dieser abgelassenen Luft zu einem Einlass des Kompressors (21) eines Luftkreislauf-Turbinenmotors (20), der mechanisch mit einer Turbine (22) gekoppelt ist,
- Führen der Luft an dem Auslass der Turbine (22) zu der Kabine (5) mittels einer Kabinen-Einlassleitung (8), worin die Luft bei einem gesteuerten Druck und Temperatur zugeführt wird,
**dadurch gekennzeichnet, dass** es weiter umfasst:
- Steuern der Strömungsrate von Luft, mit der die Turbine (22) des Turbinenmotors (20) versorgt wird, mittels einer stationären Beschaufelung (23), die einen variablen Einblas-Querschnitt aufweist und an der Turbine (22) des Turbinenmotors (20) befestigt ist, so dass die Strömungsrate von Luft, mit der ein Luft-Einlass der Turbine (22) versorgt wird, auf Wunsch modifiziert werden kann,
- Führen von Luft, die von einem Gerät (71) abgelassen wird, um Luft von aussen zu einem Einlass eines zweiten Kompressors (22) abzulassen, der an dem Turbinenmotor (20) befestigt ist und von dem ein Auslass in Fluidverbindung mit der Kabinen-Einlassleitung steht.

11. Verfahren nach Anspruch 10, **dadurch gekennzeichnet, dass** es weiter umfasst, direktes Führen der Luft an dem Auslass des zweiten Kompressors (22) zu der Kabinen-Einlassleitung (8) mittels einer Bypass-Leitung (6), die mit einem Höhen-Ventil (77) versehen ist, das ausgestaltet ist, so dass der Kompressor direkt die Kabinen-Einlassleitung (8) versorgen kann, wenn das Flugzeug eine bestimmte Höhe erreicht.

12. Verfahren nach einem der Ansprüche 10 oder 11, **dadurch gekennzeichnet, dass** es weiter umfasst:
- Führen der Luft an dem Auslass der Kabine, mittels einer Kabinen-Auslassleitung (9), zu einem Luft-Einlass einer Turbine (32) eines Turboladers (30), der mit einem Kompressor (31) mechanisch gekoppelt ist,
- Führen von Luft, das von einem Gerät abgelassen wurde, um Luft von aussen in einen Einlass des Kompressors (31) abzulassen,
- Führen der Luft an dem Auslass des Kompressors (31) zu der Kabinen-Einlassleitung (8) mittels eines Wärmetauschers (75), worin der Wärmetauscher (75) mit der Kabinen-Auslassleitung (9) in Fluidverbindung steht.

13. Flugzeug, das mindestens einen Antriebsmotor und eine Kabine umfasst, **dadurch gekennzeichnet, dass** es weiter ein System zur Reinhaltung der Kabine nach einem der Ansprüche 1 bis 9 umfasst.

## Claims

1. System for environmental control of an aircraft cabin (5), comprising:
- a device for bleeding compressed air from at least one supercharger (11) of the aircraft engine (3),
- an air cycle turbine engine (20) comprising at least one supercharger (21) and a turbine (22) which are mechanically coupled together, said supercharger (21) comprising an air inlet connected to said device for bleeding compressed air from at least one supercharger (11) by means of a duct referred to as a bleed duct (7), and said turbine (22) comprising an air outlet connected to the cabin (5) by a duct referred to as a cabin inlet duct (8), in order to be able to supply the cabin (5) with air at a controlled pressure and temperature,
**characterised in that** it further comprises:
- a blading (23) which has a variable injection cross section and is mounted on said turbine (22) of said air cycle turbine engine (20) so as to be able to modify, on command, the flow rate of air supplying an air inlet of said turbine (22),
- a second supercharger (24) mounted on said air cycle turbine engine (20) and comprising an air inlet connected to a device (71) for bleeding outside air and an outlet in fluid communication with said cabin inlet duct (8).

2. System according to claim 1, **characterised in that** it further comprises a bypass duct (6) arranged between the outlet of the second supercharger (24) of the air cycle turbine engine (20) and said cabin inlet duct (8), which bypass duct is provided with an altitude valve (77) designed to allow the supercharger to directly supply said cabin inlet duct when said cabin inlet duct (8) reaches a predetermined altitude.

3. System according to either claim 1 or claim 2, **characterised in that** it further comprises an intermediate turbocharger (30) comprising a supercharger (31) and a turbine (32) which are mechanically coupled together, said turbine (32) comprising an air inlet connected to the cabin (5) by a duct, referred to as a cabin outlet duct (9), and said supercharger (31) comprising an air inlet connected to a device (70) for bleeding outside air and an air outlet connected to said cabin inlet duct (8) by means of a heat exchanger (75), said heat exchanger (75) further being in fluid communication with said cabin outlet duct (9).

4. System according to claim 3, **characterised in that** said air outlet of the turbine (32) of the turbocharger (30) is connected to an air outlet (43) outside the aircraft so as to release the expanded air outside.

5. System according to either claim 3 or claim 4, **characterised in that** said turbocharger (30) is a turbocharger having two parallel turbine stages.

6. System according to any of claims 3 to 5, **characterised in that** it further comprises a heat exchanger in fluid communication with said air bleed duct and a duct for supplying the turbine of the intermediate turbocharger.

7. System according to any of claims 1 to 6, **characterised in that** said outlet of the supercharger (21) of the air cycle turbine engine (20) is connected to the inlet of said turbine (22) by means of at least one heat exchanger (19), which in turn is in fluid communication with a dynamic outside air scoop (72).

8. System according to any of claims 1 to 7, **characterised in that** said air bleed duct (7) is provided with at least one heat exchanger (18) in fluid communication with a dynamic outside air scoop (72).

9. System according to either claim 7 or claim 8, **characterised in that** it further comprises an electric fan (41) designed to be able to ensure the circulation of air through said heat exchangers (17, 18, 19).

10. Method for environmental control of an aircraft cabin (5), comprising:
- bleeding compressed air from at least one supercharger (11) of the aircraft engine by means of a device for bleeding air,
- guiding, by means of a bleed duct (7), this bled air to an inlet of a supercharger (21) of an air cycle turbine engine (20) which is mechanically coupled to a turbine (22),
- guiding the air at the outlet of the turbine (22) to said cabin (5) by means of a cabin inlet duct (8), said air being supplied at a controlled pressure and temperature,
**characterised in that** it further comprises:
- controlling the flow rate of air supplying said turbine (22) of the turbine engine (20) by means of stationary blading (23) which has a variable injection cross section and is mounted on said turbine (22) of said turbine engine (20) so as to be able to modify, on command, the flow rate of air supplying an air inlet of said turbine (22),
- guiding air bled by a device (71) for bleeding outside air to an inlet of a second supercharger (22) which is mounted on said turbine engine (20) and of which one outlet is in fluid communication with said cabin inlet duct.

11. Method according to claim 10, **characterised in that** it further comprises directly guiding the air at the outlet of the second supercharger (22) to said cabin inlet duct (8) by means of a bypass duct (6) provided with an altitude valve (77) designed to allow the supercharger to directly supply said cabin inlet duct (8) when the aircraft reaches a predetermined altitude.

12. Method according to either claim 10 or claim 11, **characterised in that** it further comprises:
- guiding the air at the outlet of the cabin, by means of a cabin outlet duct (9), to an air inlet of a turbine (32) of a turbocharger (30) which is mechanically coupled to a supercharger (31),
- guiding air bled by a device for bleeding outside air to an inlet of the supercharger (31),
- guiding the air at the outlet of the supercharger (31) to said cabin inlet duct (8) by means of a heat exchanger (75), said heat exchanger (75) being in fluid communication with said cabin outlet duct (9).

13. Aircraft comprising at least one propulsion engine and a cabin,
**characterised in that** it comprises a system for environmental control of said cabin according to any of claims 1 to 9.
